# EUROPEAN PATENT APPLICATION

(11) **EP 4 741 233 A1**
(43) Date of publication of application: **13.05.2026**
(21) Application number: 25383210.9
(22) Date of filing: 06.11.2025
(51) Int. Cl.: B60R 21/207, B60R 21/216, B60R 21/215

(54) **CLOSURE COVER OF AN AIRBAG ASSEMBLY AND SEAT BACK ASSEMBLY FOR A VEHICLE COMPRISING IT**

(30) Priority: 11.11.2024 ES 202430931
(71) Applicant: Seat, S.A., 08760 Martorell (ES)
(72) Inventor: MORENO BARBETA, Alfons, 08760 Martorell (ES); FERNANDEZ PADILLA, Miguel Angel, 08760 Martorell (ES)
(74) Representative: Elzaburu S.L.P.

(57) **Abstract**

This invention refers to a closure cover of an airbag assembly and a vehicle seat back assembly comprising it, wherein the closure cover (116) comprises a first and a second area, a retaining system set to mechanically attach the closure cover (116) to the seat back cover (115) and to break when the airbag (114) exerts a pushing force on said closure cover (116) greater than the default value, allowing said airbag (114) to exit from the hollow cavity (211) towards the open space created between said front edge of the closure cover (116) and the side surface (212) of the seat back cover (115), and a positioning system set to keep the closure cover (116) mechanically attached to the seat back cover (115) after breakage.

## Description

### TECHNICAL FIELD OF THE INVENTION

This invention lies within the field of automotive engineering. More specifically, it refers to a closure cover of an airbag assembly and to the seat back assembly comprising it.

### BACKGROUND OF THE INVENTION

In general, a vehicle front seat assembly comprises a seat base and a seat back assembly. Depending on the seat model, said seat back assembly may comprise a frame, a seat foam adapted to cover the frame, and a seat back cover attachable to the frame and adapted to cover the rear surface and, at least partially, the side surfaces of the vehicle seat back assembly.

Current solutions may further comprise at least one airbag assembly. The side airbag assembly includes an inflatable airbag installed between an outer side of the seat back cushion and an outer side surface of the vehicle front seat back.

During a collision, the side airbag inflates to offer protection to the vehicle's occupants. As the airbag inflates, the outer side surface of the seat back separates from the trim cover, creating an opening between the trim cover, the seat back cushion, and the outer side surface of the front seat back. The opening through which the airbag expands faces outward in the vehicle forward direction, along the "X"-axis, to protect the side of the front seat occupant.

Current solutions require a complex system whose installation in the vehicle involves a long assembly time for the installer. Furthermore, the current setup may cause damage either to the expanding airbag or to an occupant inside the passenger compartment during the detachment of the outer side surface of the seat back that allows the airbag outlet to open without causing damage.

Therefore, it is desirable to provide a solution that is easy to install and enables proper deployment of the airbag assembly, avoiding the drawbacks of existing devices in the state of the art, such as contact with the rear seat occupants or with the head of the front seat occupant.

### DESCRIPTION OF THE INVENTION

The object of this invention is to provide a solution related to a closure cover of an airbag assembly.

Said closure cover is set to be assembled onto a seat back cover of a seat back assembly of a vehicle seat, covering a hollow cavity located on the side surface of said seat back cover. Said hollow cavity comprises the airbag assembly, from which the closure cover is detachable.

Specifically, this invention refers to a closure cover comprising:
- a first and a second area, set to cover a part of the side surface of the seat back cover and a part of the rear surface of the seat back cover, respectively;
- a retaining system arranged on a front edge of the first area of the closure cover; and
- a positioning system arranged on a rear edge of the second area of the closure cover.

In this way, the front edge or first edge of the first area of the closure cover is the edge of the first area contacting the side surface of the seat back cover. The rear edge or second edge of the first area of the closure cover forms a ridge with the second area of the closure cover, specifically with the front edge or first edge of the second area of the closure cover. In turn, the rear edge or second edge of the second area of the closure cover is the edge of the second area contacting the rear surface of the seat back cover.

Therefore, for the sake of simplicity and clarity in the description, considering the ridge between the first and second areas of the closure cover, this invention uses "front edge" to refer to the area joined to the side surface of the seat back cover, and "rear edge" to refer to the area joined to the rear surface of the seat back cover.

The retaining system is set to mechanically attach the closure cover to the seat back cover. Furthermore, the retaining system may break, in use, when the airbag located in the hollow cavity of the side surface exerts a pushing force, greater than the default value, on said closure cover.

Breaking of the retaining system allows the airbag to exit from the hollow cavity, where it is initially located, towards the open space generated between said front edge of the closure cover and the side surface of the seat back cover. This breakage occurs in a controlled fashion, ensuring that the opening of the closure cover is appropriate.

In turn, the positioning system is set to keep the closure cover mechanically attached to the seat back cover after the breakage of at least one retainer.

Thanks to this invention, which defines a closure cover having a first and a second area arranged in an "L" setup, a proper and controlled deployment of the airbag assembly is achieved, ensuring a correct opening while avoiding safety issues by reducing contact with the rear seat occupants or with the head of the front seat occupant.

Specifically, if the hinge connection is placed on the same side surface, it would be more difficult to achieve a strong connection that keeps the cover securely attached to the seat structure, and the force of the airbag deployment could become excessively violent and hazardous for the vehicle occupants.

In the proposed solution, the cover is fastened by screws in the rear area and, during airbag deployment, the cover fully deforms along its side surface to allow release. If the screw fastening were located on the side surface, the opening and deformation of the cover itself would be hindered, making it impossible to guarantee a proper and controlled opening.

In a further aspect of the invention, the solution refers to a vehicle seat back assembly. Said assembly comprises a frame, a seat foam adapted to cover the frame, a seat back cover attachable to the frame and adapted to cover the rear surface and, at least partially, the side surfaces of the vehicle seat back assembly, at least one airbag assembly arranged in a respective hollow cavity of the seat back cover, and at least one closure cover, according to this invention. The "at least one closure cover" is arranged covering the respective hollow cavity of the seat back cover, where at least one airbag assembly is installed.

Due to the setup of the closure cover, the described vehicle seat back assembly is easier for an operator to install. Furthermore, it provides significant improvement in vehicle maintenance in the event of a collision, since the seat upholstery is not affected by the inflation of the airbag, and the only component to be replaced is the closure cover of the assembly.

In conclusion, this invention improves the installation and maintenance capabilities of a vehicle seat by reducing the damage caused during inflation of an airbag assembly.

In the figures of this invention, reference is made to the following set of elements:
- 111: Seat back assembly
- 112: Seat back frame
- 113: Seat foam
- 114: Airbag
- 115: Seat back cover
- 116: Closure cover
- 121: Rear side of the hollow cavity
- 122: Retaining slots
- 123: Braking strap
- 124: Positioning protrusion
- 126: Brake housing
- 127: Projecting plate
- 128: Screwed joint
- 211: Hollow cavity
- 212: Side surface of the seat back cover
- 213: Front side of the hollow cavity
- 214: Retaining clips
- 215: Rear surface of the seat back cover
- 411: Projecting brake
- 412: Plate housing

### BRIEF DESCRIPTION OF THE DRAWINGS

Figure 1 shows an external view of a vehicle seat back assembly comprising a closure cover assembled to a seat back cover of said seat back assembly.
Figure 2 shows an external view of the hollow cavity of a vehicle seat assembly comprising an installed airbag assembly.
Figure 3 shows a schematic view of a section of a vehicle seat assembly in its installation arrangement.
Figure 4 shows a schematic view of a section of a vehicle seat assembly in its opening arrangement, prior to airbag inflation.
Figure 5 shows a view of the internal elements of a particular embodiment of a closure cover and a seat back cover, according to this invention.
Figure 6 shows an embodiment of the vehicle seat assembly where a screwed joint is shown for fastening the closure cover to the side of the seat back cover.
Figure 7 shows the attachment of a closure cover to a seat back cover and to the frame of the seat back assembly, where the closure cover comprises a braking strap.

### DETAILED DESCRIPTION OF THE INVENTION

The object of this invention is a closure cover (116) of an airbag assembly (114).

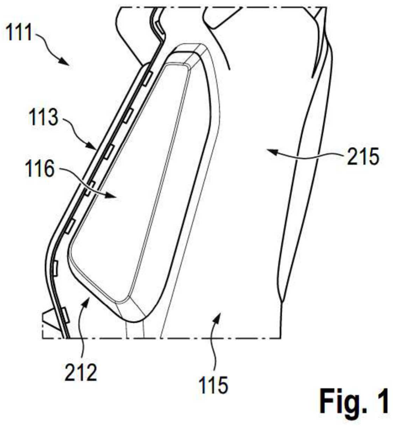

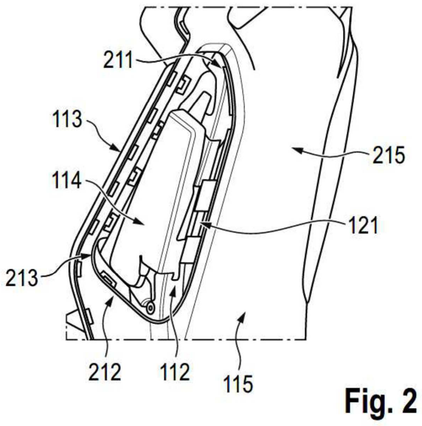

As shown in Figure 1, the closure cover (116) is set to be assembled to a seat back cover (115) of a seat back assembly (111), without interacting with the seat foam (113). In this way, the closure cover (116) covers a hollow cavity (211) located on the side surface (212) of the seat back cover (115). In Figure 2, in which the closure cover (116) is not installed, it may be seen that the hollow cavity (211) is designed to house an airbag assembly (114). Unlike previous solutions, this invention improves the installation and maintenance capabilities of a vehicle seat by reducing damage, including damage to the seat foam upholstery (113), caused during the inflation of an airbag assembly (114). That is to say, thanks to the setup of the closure cover (116), according to this invention, the closure cover (116) is detachable from the seat back cover (115) in a controlled and safe fashion due to the effect of the airbag deployment of the airbag assembly (114).

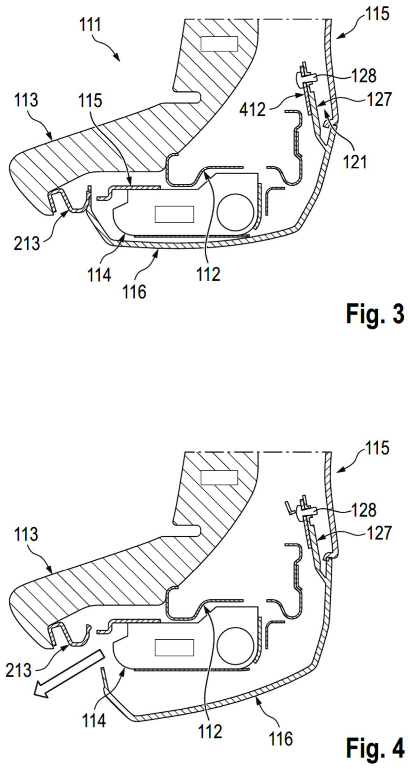

As shown in Figures 3 and 4, which illustrate a sectional view according to the vehicle's forward direction, the closure cover (116) has an installation arrangement, in which it (116) encloses the hollow cavity (211) and the elements contained therein, and an opening arrangement, in which the closure cover (116) is detached, at least partially, from the seat back cover (115), so that the airbag (114) can deploy and protect the seat occupants in the event of a collision.

Unlike previous solutions, the closure cover (116) comprises a first area set to cover part of the side surface (212) of the seat back cover (115), and a second area set to cover part of the rear surface (215) of the seat back cover (115).

The closure cover (116) further comprises retaining and positioning systems.

The retaining system is arranged on a front edge of the first area of the closure cover (116). The retaining system is set to mechanically attach the closure cover (116) to the seat back cover (115). The closure cover (116) is further set to break when the airbag (114) exerts a pushing force greater than the default value. Through this breakage, the airbag (114) is allowed to exit from the hollow cavity (211), where it is located, towards the open space created between said front edge of the closure cover (116) and the side surface (212) of the seat back cover (115).

In turn, the positioning system is arranged on a rear edge of the second area of the closure cover (116). The positioning system is set to keep the closure cover (116) mechanically attached to the seat back cover (115) after the breakage of at least one retainer.

As shown in Figures 3 and 4, the positioning system may comprise at least one projecting plate (127). The projecting plate (127) extends from the rear edge of the second area of the closure cover (116). Said projecting plate (127) is set to fit into at least one pertinent plate housing (412), located on the peripheral edge, specifically on a rear side (121), of the hollow cavity (211) of the seat back cover (115).

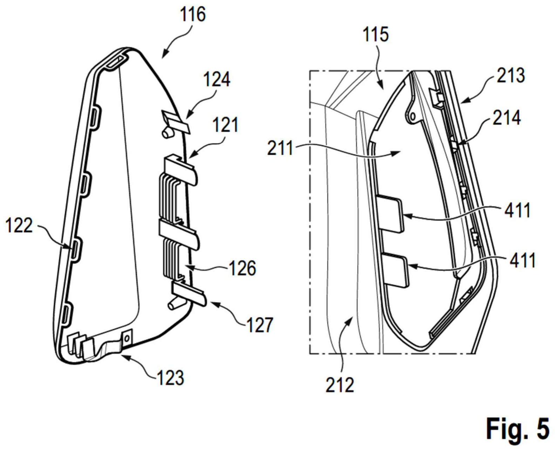

Figure 5 shows a view of the internal elements of a particular embodiment of a closure cover (116) and a seat back cover (115), according to this invention.

Specifically, the positioning system may comprise at least one brake housing (126). In this particular embodiment, the brake housing (126) may extend from the rear edge of the second area of the closure cover (116). In this way, it is set to couple with the pertinent projecting brakes (411) located on the rear side (121) of the peripheral edge of the hollow cavity (211) of the seat back cover (115).

In one particular embodiment, the positioning system comprises at least two projecting plates (127) and at least two brake housings (126) evenly distributed along the rear edge of the second area of the closure cover (116). In an even more particular embodiment, the "at least two projecting plates" (127) and the "at least two brake housings" (126) are alternately arranged with each other.

In another particular embodiment, the "at least one projecting plate" (127) and/or the "at least one brake housing" (126) extend in a direction substantially parallel to the vertical plane defined by the second area of the closure cover (116). In other words, according to this embodiment, these elements extend along the Y-axis direction.

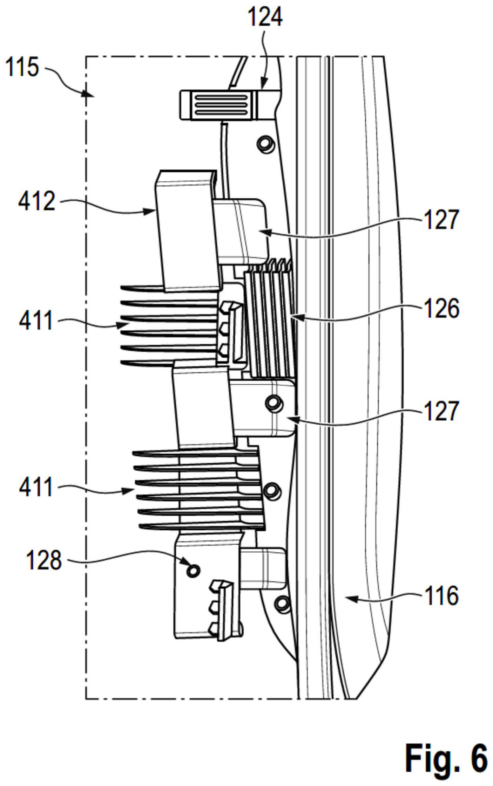

Furthermore, the "at least one projecting plate" (127) may be set and arranged to be mechanically connected with its pertinent plate housing (412). As shown in Figure 6, said connection may be made by means of a screwed joint (128). In this way, said screwed joint (128) may be arranged perpendicularly to the vertical plane defined by the second area of the closure cover (116). This direction coincides with the direction along the X-axis of the vehicle. In general, the connection is made in a direction towards the interior of the seat back assembly (111), so that installation is easier for the operator.

In one particular embodiment, the plurality of projecting plates (127) may be inserted into a plurality of plate housings (412) that extends along the Y-axis of the vehicle. In particular, the plate housings (412) extend from a rear side (121) towards the interior of the hollow cavity (211) of the seat back cover (115).

Therefore, the solution may comprise brake housings (126). Each brake housing (126) is adapted to retain a projecting brake (411) that extends, along the Y-axis of the vehicle, from the rear side (121) of the seat back cover (115).

In one particular embodiment, in the assembled position of the closure cover (116) on the seat back cover (115), the plurality of projecting brakes (411) is inserted into the brake housings (126), while the plurality of projecting plates (127) is inserted into the plurality of plate housings (412) arranged on the rear side (121) of the hollow cavity (211) of the seat back cover (115).

In another embodiment, the closure cover (116) may comprise at least one positioning protrusion (124). The "at least one positioning protrusion" (124) is arranged on the rear edge of the second area of the closure cover (116). Said "at least one positioning protrusion" (124) extends from said rear edge and is set to position the closure cover (116) in relation to the seat back cover (115) during the assembly operation.

Thus, in another particular embodiment, the retaining system comprises a plurality of retaining slots (122) that extends from the front edge of the first area of the closure cover (116). The plurality of retaining slots (122) is evenly distributed along said front edge. Said retaining slots (122) are set to receive retaining clips (214) arranged on the front side (213) of the peripheral edge of the hollow cavity (211) of the seat back cover (115).

In another particular embodiment, the retaining system comprises a plurality of retaining clips (214) that extends from the front edge of the first area of the closure cover (116). The plurality of retaining clips (214) is evenly distributed along said front edge and said retaining clips (214) are set to be press-fitted into the pertinent retaining slots (122) arranged on the front side (213) of the peripheral edge of the hollow cavity (211) of the seat back cover (115). In an even more particular embodiment, the retaining clips (214) are protruding elements having a mechanical fuse-type breaking setup, extending along the Y-axis of the vehicle.

As mentioned above, the connection at the front edge of the first area of the closure cover (116) is designed to break in a controlled fashion when airbag inflation (114) is required. In this way, both the retaining slot (122) and the retaining clip (214) may be designed to have controlled breakage, allowing optimal airbag (114) deployment without affecting the vehicle seat components.

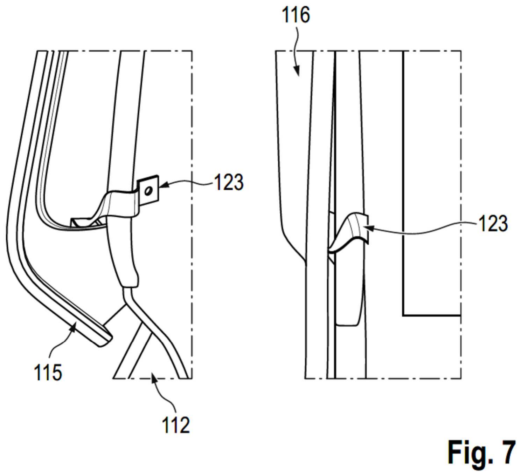

In one particular embodiment, the closure cover (116) comprises a braking strap (123). The braking strap (123) comprises a first and a second end. The first end is fixed to the rear surface of the closure cover (116). In one particular embodiment, the fixing is arranged near the lower end of the front edge of said closure cover (116). In turn, as shown in Figure 7, the second end, opposite the first end of the braking strap (123), is set to be fixed to the frame (112) of the vehicle seat. In a more particular embodiment, the second end of the braking strap (123) is inserted through a guiding slot located in the seat back cover (115). In this way, the closure cover (116) may provide additional fastening, increasing safety in case the airbag assembly (114) is activated.

Specifically, the braking strap (123) may have a setup with a cross-section along the X-axis of the vehicle, resulting in a high-safety setup during use. Alternatively, the setup could be simplified, adopting an L-shaped design that allows easier attachment to the frame (112).

In a second aspect of the invention, the solution refers to a seat back assembly (111). The seat back assembly (111) comprises a frame (112), a seat foam (113), a seat back cover (115), at least one airbag assembly (114), and at least one closure cover (116) as described above.

The seat foam (113) is adapted to cover the frame (112) so as to provide comfort to the seat occupant. The seat back cover (115) is attachable to the frame (112) and adapted to cover the rear surface of the seat back assembly (111) and, at least partially, the side surfaces of the vehicle seat back assembly (111).

The "at least one closure cover" (116) is arranged covering the pertinent hollow cavity (211) of the seat back cover (115), as well as the "at least one airbag assembly" (114) arranged within said cavity.

In a particular embodiment, the seat back cover (115) may comprise at least one plate housing (412) located on the rear side (121) of the peripheral edge of the hollow cavity (211). The plate housing (412) is set to couple with a pertinent projecting plate (127).

In another particular embodiment, the seat back cover (115) may comprise at least one projecting brake (411) located on the rear side (121) of the peripheral edge of the hollow cavity (211) of the seat back cover (115). Each projecting brake (411) is set to couple with a pertinent brake housing (126) of the closure cover (116).

In another particular embodiment, the seat back cover (115) may comprise a plurality of retaining clips (214) arranged on the front side (213) of the peripheral edge of the hollow cavity (211) of the seat back cover (115) and evenly distributed along said front side (213), said retaining clips (214) being set to couple with a plurality of retaining slots (122).

Alternatively, the seat back cover (115) may comprise a plurality of retaining slots (122) arranged on the front side (213) of the peripheral edge of the hollow cavity (211) of the seat back cover (115). The plurality of retaining slots (122) is evenly distributed along said front side (213). Each retaining slot (122) is set to couple with one of the plurality of retaining clips (214).

In one particular embodiment, the seat back cover (115) may comprise a guiding slot set to guide a braking strap (123) of the closure cover (116).

Therefore, the closure cover (116), as well as the seat assembly comprising it, described in this invention, provides an alternative and an improvement over existing solutions. In particular, this invention improves the installation and maintenance capabilities of a vehicle seat by reducing damage occurring during the inflation of an airbag assembly (114) arranged in a side cavity of the seat.

## Claims

1. A closure cover of an airbag assembly, said closure cover (116) being set to be assembled to a seat back cover (115) of a seat back assembly (111) of a vehicle seat, covering a hollow cavity (211) in which the airbag assembly (114) is arranged, **characterized in that** the closure cover (116) comprises a first area set to cover part of the side surface (212) of the seat back cover (115), and a second area set to cover part of the rear surface (215) of the seat back cover (115), said closure cover (116) further comprising:
- a retaining system arranged on a front edge of the first area of the closure cover (116), the retaining system being set to mechanically attach the closure cover (116) to the seat back cover (115) and to break when the airbag (114) exerts a pushing force on said closure cover (116) greater than the default value, allowing said airbag (114) to exit from the hollow cavity (211) towards the open space generated between said front edge of the closure cover (116) and the side surface (212) of the seat back cover (115);
- a positioning system arranged on a rear edge of the second area of the closure cover (116), the positioning system being set to keep the closure cover (116) mechanically attached to the seat back cover (115) after the breakage of the retaining system.

2. The closure cover, according to Claim 1, wherein the positioning system comprises at least one projecting plate (127) extending from the rear edge of the second area of the closure cover (116), said plate being set to couple with at least one pertinent plate housing (412) located on the rear side (121) of the hollow cavity (211) of the seat back cover (115).

3. The closure cover, according to Claim 2, wherein the positioning system comprises at least one brake housing (126) extending from the rear edge of the second area of the closure cover (116), said brake housing being set to couple with the pertinent projecting brakes (411) located on the rear side (121) of the hollow cavity (211) of the seat back cover (115).

4. The closure cover, according to Claim 3, wherein the positioning system comprises at least two projecting plates (127) and at least two brake housings (126) evenly distributed along the rear edge of the second area of the closure cover (116), and wherein the "at least two projecting plates" (127) and the "at least two brake housings" (126) are alternately arranged with each other.

5. The closure cover, according to any of Claims 2 to 4, wherein the "at least two projecting plates" (127) and/or the "at least two brake housings" (126) extend in a direction substantially parallel to the vertical plane defined by the second area of the closure cover (116).

6. The closure cover, according to any one of Claims 1 to 5, comprising at least one positioning protrusion (124) arranged on the rear edge of the second area of the closure cover (116) and extending from said rear edge, said positioning protrusion (124) being set to position the closure cover (116) in relation to the seat back cover (115) during the assembly operation.

7. The closure cover, according to any one of Claims 1 to 6, wherein the retaining system comprises a plurality of retaining slots (122) extending from the front edge of the first area of the closure cover (116) and evenly distributed along said front edge, said retaining slots (122) being set to receive retaining clips (214) arranged on the front side (213) of the hollow cavity (211) of the seat back cover (115).

8. The closure cover, according to any one of Claims 1 to 6, wherein the retaining system comprises a plurality of retaining clips (214) extending from the front edge of the first area of the closure cover (116) and evenly distributed along said front edge, said retaining clips (214) being set to be press-fitted into the pertinent retaining slots (122) arranged on the front side (213) of the hollow cavity (211) of the seat back cover (115).

9. The closure cover, according to any one of Claims 1 to 8, comprising a braking strap (123) wherein a first end is fixed on the rear surface of the closure cover (116), and wherein a second end opposite the first end of the braking strap (123) is set to be attached to the frame (112) of the vehicle seat.

10. The closure cover, according to Claim 9, wherein the second end of the braking strap (123) is inserted through a guide slot located in the seat back cover (115).

11. A vehicle seat back assembly, comprising:
- a frame (112);
- a seat foam (113) adapted to cover the frame (112);
- a seat back cover (115) attachable to the frame (112) and adapted to cover the rear surface and, at least partially, the side surfaces of the vehicle seat back assembly (111);
- at least one airbag assembly (114) arranged in a respective hollow cavity (211) of the seat back cover (115); and
- at least one closure cover (116), according to any one of Claims 1 to 10, said "at least one closure cover" (116) being arranged to cover the "at least one airbag assembly" (114).

12. The seat back assembly, according to Claim 11, wherein the seat back cover (115) comprises at least one plate housing (412) located on the rear side (121) of the hollow cavity (211) and set to couple with the pertinent projecting plate (127).

13. The seat back assembly, according to any one of Claims 11 or 12, wherein the seat back cover (115) comprises at least one projecting brake (411) located on the rear side (121) of the hollow cavity (211) of the seat back cover (115) and set to couple with the pertinent brake housing (126).

14. The seat back assembly, according to any one of Claims 11 to 13, wherein the seat back cover (115) comprises a plurality of retaining clips (214) arranged on the front side (213) of the hollow cavity (211) of the seat back cover (115) and evenly distributed along said front side (213), said retaining clips (214) being set to couple with a plurality of retaining slots (122).

15. The seat back assembly, according to any one of Claims 11 to 13, wherein the seat back cover (115) comprises a plurality of retaining slots (122) arranged on the front side (213) of the hollow cavity (211) of the seat back cover (115) and evenly distributed along said front side (213), said retaining slots (122) being set to couple with a plurality of retaining clips (214).
